Europäisches Patentamt

(19) European Patent Office

Office européen des brevets

(11) Numéro de publication : **0 465 331 A1**

## (12) DEMANDE DE BREVET EUROPEEN

(21) Numéro de dépôt : **91401790.0**

(22) Date de dépôt : **01.07.91**

(51) Int. Cl.$^5$ : **B60S 1/38**

(30) Priorité : **05.07.90 FR 9008543**

(43) Date de publication de la demande :
**08.01.92 Bulletin 92/02**

(84) Etats contractants désignés :
**DE ES GB IT**

(71) Demandeur : **VALEO SYSTEMES D'ESSUYAGE**
**11, rue Faraday**
**F-78180 Montigny-Le-Bretonneux (FR)**

(72) Inventeur : **Roumegoux**
**4, rue de Sfax**
**F-75016 Paris (FR)**

(74) Mandataire : **Gamonal, Didier**
**Société VALEO Service Propriété Industrielle**
**30, rue Blanqui**
**F-93406 Saint-Ouen Cédex (FR)**

(54) **Balai d'essuie-glace notamment pour véhicule automobile.**

(57)  Un balai d'essuie glace comporte une lame d'essuie-glace (3) portée par des griffes (16,16') d'une monture porteuse (2), de manière à essuyer une surface vitrée (S).
  Selon l'invention, les griffes (16') sont portées par un levier coulissant soumis à l'action d'un moyen élastique (30) tendant à solliciter la lame d'essuie-glace (3) vers la surface à esssuyer (S).

FIG.2

EP 0 465 331 A1

La présente invention se rapporte à un balai d'essuie-glace, notamment pour véhicules automobiles.

On sait que, pour essuyer des surfaces vitrées, notamment des pare-brise de véhicules automobiles, on utilise des essuie-glaces animés d'un mouvement de balayage régulier.

Ces essuie-glaces sont généralement constitués d'un bras d'essuie-glace soumis à une rotation alternative et liés à articulation avec un balai d'essuie-glace.

De tels balais d'essuie-glace comportent une monture, sur laquelle est ménagée un dispositif de liaison avec le bras d'essuie-glace, ladite monture supportant elle-même une lame d'essuie-glace, généralement en caoutchouc, qui porte sur la surface à essuyer.

On cherche, pour que le balai d'essuie-glace ait une efficacité constante sur toute sa longueur, à répartir aussi uniformément que possible, le long de la lame racleuse, la pression d'appui générée par le bras d'essuie-glace.

Dans les balais d'essuie-glace de l'Art Antérieur, la lame d'essuie-glace est maintenue par une pluralité d'étriers articulés sur la monture principale, chacun de ces étriers permettant de disposer de deux points d'accrochage de la lame d'essuie-glace en répartissant ainsi la pression d'appui du balai d'essuie-glace sur la surface à essuyer, et cela en fonction de la position de l'articulation de l'étrier sur la monture.

L'inconvénient de tels balais réside dans le fait que les pare-brise actuels comportent une courbure, en particulier sur les bords latéraux, telle que la répartition d'appui ne permette pas de garder le contact de la lame d'essuie-glace sur la surface à essuyer, et cela notamment dans la région extrême longitudinale supérieure dudit balai.

Il a été proposé, comme mieux visible dans le document FR-A-1.145.640, de réaliser des balais d'essuie-glace, comportant une monture principale à l'une des extrémités de laquelle est rapporté à articulation un levier de pression dont l'extrémité libre est accrochée de manière coulissante à l'extrémité libre supérieure de la lame d'essuie-glace, ce levier étant soumis à l'action d'un ressort de manière à pouvoir pivoter autour de l'articulation, et cela dans la direction de la surface à essuyer en permettant ainsi de faire épouser la courbure de la surface à essuyer à la lame d'essuie-glace.

Il a été cependant constaté que ces balais présentaient quelques inconvénients.

Notamment, il était nécessaire de disposer d'une monture principale spécifique pour résoudre ce problème, cette monture principale comportant une multiplicité de pièces aptes à recevoir le levier et compliquant ainsi le montage en augmentant le coût dudit balai.

De plus, lorsque le levier de pression est soumis à une rotation autour de son axe en direction de la surface à essuyer, le point d'accrochage du levier sur la lame d'essuyage va glisser en s'éloignant de la région extrême longitudinale de la lame en entraînant, de ce fait, une perte de contact de cette région de la lame avec la surface à essuyer.

Cette perte de contact génère, lorsque le balai est au repos et que le véhicule est en marche, une vibration au niveau de la région extrême supérieure de la lame qui est nuisible au confort du passager et qui peut entraîner une perte de performance de la lame.

La présente invention se propose de remédier aux inconvénients mentionnés ci-dessus, en présentant un balai d'essuie-glace présentant une architecture semblable à celle des balais habituellement utilisés tout en permettant un essuyage convenable et un appui adequat de la lame sur la surface vitrée.

Selon l'invention, le balai d'essuie-glace, notamment pour véhicule automobile, comportant une monture présentant des griffes portant une lame d'essuie-glace apte à essuyer une surface vitrée est caractérisé en ce que les griffes sont portées par un levier coulissant à sollicitant la lame d'essuie-glace vers la surface à essuyer.

Grâce à l'invention, le point d'application de la pression d'appui générée par le bras d'essuyage se trouvera en concordance avec la courbure de la surface à essuyer et permettra ainsi un contact de la lame avec la surface à essuyer.

Les autres caractéristiques et avantages de l'invention ressortiront de la description qui va suivre en se référant aux dessins annexés sur lesquels :
– la figure 1 est une vue d'ensemble montrant le balai d'essuie-glace selon la présente invention ;
– la figure 2 est une vue de détail selon la référence A de la figure 1.

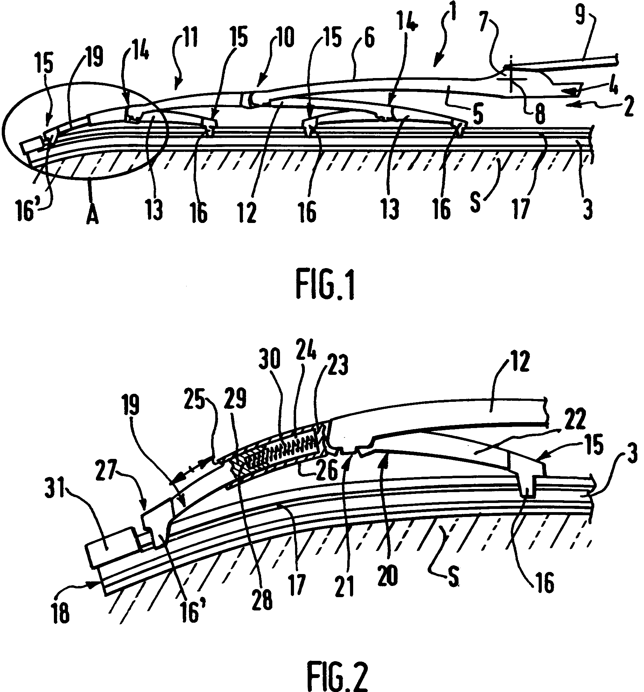

La figure 1 représente un balai d'essuie-glace 1 comprenant une monture porteuse 2 d'une lame d'essuie-glace 3 apte à venir essuyer une surface vitrée S telle qu'un pare-brise de véhicule automobile.

La monture porteuse est constituée d'une monture principale ou étrier principal 4, allongé et légèrement cintré, qui présente une section en "U" inversé, à flancs 5, sensiblement parallèles l'un à l'autre, et perpendiculaire à l'âme 6 dudit "U".

Dans sa partie centrale, et de manière connue en soi, l'âme 6 de l'étrier principal 3 présente une ouverture (non représentée) délimitée latéralement par deux ailes 7, sensiblement dans le prolongement des flancs 4, ces ailes 7 étant reliées entre elles par un axe de pivotement 8.

L'ouverture de la partie centrale et l'axe de pivotement 8 permettent le montage de la monture porteuse sur une partie femelle d'articulation, du type connu, portée par l'extrémité d'un bras d'essuie-glace 9.

Au moins une extrémité libre 10 de l'étrier principal 4 porte à articulation au moins une monture intermédiaire 11, de forme sensiblement identique à l'étrier principal, c'est-à-dire allongée, cintrée et de section en "U" inversé.

Dans le cas de la figure 1, il est prévu de disposer une monture intermédiaire constitué d'un étrier secondaire 12 et de deux étriers auxiliaires 13.

L'étrier secondaire 12 présente une section en "U" de dimensions telles, au moins dans sa partie centrale, que cette dernière section est retenue et reçue dans la section du "U" de l'étrier principal 4, de manière à permettre l'articulation à pivotement de cet étrier secondaire par rapport à l'étrier principal 4, et cela de façon connue en soi.

A chacune de ses deux extrémités 14, l'étrier secondaire 12 reçoit à articulation un étrier auxiliaire 13, de forme également allongée et cintrée, lesdits étriers secondaires présentant à chacune de leurs extrémités 15 des griffes de pincement 16,16' pour le maintien de la lame d'essuie-glace 3.

De manière connue en soi, ces griffes pénètrent dans des rainures 17 que présente la lame d'essuie-glace 3 et ne seront pas plus décrits en détail dans la suite de la description.

Bien entendu, et cela sans sortir du cadre de l'invention, la monture porteuse de la lame peut être constituée uniquement par l'étrier principal 4, les griffes 16 étant portées par ses extrémités 10, ou par un étrier principal 4 associé à au moins un étrier secondaire 13, les griffes étant portées par les extrémités 14 de l'étrier secondaire 13.

En se référant maintenant à la figure 2, qui est une vue de détail à plus grande échelle selon la référence A de la figure 1, il peut être remarqué que les griffes 16' situées le plus près de l'éxtrémité longitudinale supérieure libre 18 de la lame 3 sont portées par un levier coulissant 19 supporté par un corps 20, le levier 19 et le corps 20 formant l'étrier auxiliaire 13 articulé en 21 sur l'étrier secondaire 12.

Plus précisément, le corps 20 de forme allongée et cintrée présente une première branche 22, de proportion sensiblement égale aux deux tiers du corps 20, partant de l'articulation 21 et se dirigeant vers l'axe de pivotement 8 de l'étrier principal 4 en venant aboutir, de par sa forme cintrée, au niveau de la lame 3 en portant celle-ci grâce aux griffes 16 prévues sur son extrémité 15.

Dans la direction opposée et à partir de l'articulation 21, s'érige une deuxième branche 23, de dimension longitudinale moindre que la première branche 22, environ le tiers de la dimension longitudinale du corps 20 et portant dans son corps un évidement longitudinal 24, présentant une face ouverte 25 et un fond 26, l'évidement 24 étant adapté à recevoir à coulissement le levier 19 par sa face ouverte 25.

Le levier coulissant 19 présente une forme allongée et cintrée portant à l'une 27 de ses extrémités les griffes de pincement 16' de la lame 3 et présentant à l'autre 28 de ses extrémités une partie 29 apte à coopérer à glissement longitudinal avec l'évidement 24 de la branche 23.

De préférence, la coopération entre la partie 29 et l'évidement 24 permet une immobilisation en rotation d'une pièce par rapport à l'autre, telle qu'une coopération de forme en section quadrilatérale.

Comme mieux visible sur la figure 2, il est prévu de disposer, à l'intérieur de l'évidement 24, un moyen élastique, tel qu'un ressort 30, dont l'une des extrémités s'appuie sur le fond 26 de l'évidement 24 et dont l'autre des extrémités prend appui sur l'extrémité libre de la partie 29 coulissante dans l'évidement 24, ladite partie présentant un logement creux apte à porter en partie le ressort 30

De ce fait, le levier 19 peut coulisser en direction de la surface à essuyer S sous l'action du ressort 30, en entraînant un glissement des griffes 16' le long des rainures 17 en direction de l'extrémité 18 de la lame 3, ces griffes pouvant venir en butée contre un arrêtoir 31 prévu à l'extrémité libre 18 de la lame, cet arrêtoir étant généralement constitué par un moyen d'immobilisation de la lame caoutchouc 3 sur les moyens de raidissement que porte habituellement une lame d'essuie-glace et quine sera pas plus décrit en détail.

Ainsi, dans le cas de fortes courbures du pare-brise dans les régions latérales, le ressort 30 exercera une action sur le levier coulissant 19 de manière à ce que la griffe 16' se déplace dans la direction de la surface à essuyer tout en rapprochant le point d'application de cette griffe vers l'extrémité de la lame 3 en entraînant ainsi cette lame d'essuie-glace dans la même direction pour assurer le contact entre cette lame et la surface à essuyer.

Bien entendu, la présente invention n'est pas limitée aux exemples de réalisations décrits, mais englobe toutes variantes, notamment il peut être prévu que le balai d'essuie-glace 1 soit dépourvu d'étrier intermédiaire 11 et, dans ce cas, les griffes 15 seront portées par l'étrier principal 4 en aménageant l'extrémité libre de cet étrier concerné, de manière à ce que la griffe 15 puisse être portée par un levier coulissant, comme indiqué plus haut.

**Revendications**

1) Balai d'essuie-glace, notamment pour véhicule automobile, comportant une monture (2,4,12,13) présentant des griffes (16,16') portant une lame d'essuie-glace (3) apte à essuyer une surface vitrée (S), caractérisé en ce que les griffes (16') sont portées par un levier coulissant (19) sollicitant la lame d'essuie-glace (3) vers la surface à essuyer (S).

2) Balai d'essuie-glace selon la revendication 1, caractérisé en ce que le levier coulissant (19) est soumis à l'action de moyens élastiques (30).

3) Balai d'essuie-glace selon l'une des revendications précédentes, caractérisé en ce que les moyens élastiques (30) sont portés par le levier (19).

**4)** Balai d'essuie-glace selon la revendication 1, caractérisé en ce que les moyens élastiques comprennent un ressort (30).

**5)** Balai d'essuie-glace selon l'une des revendications précédentes, caractérisé en ce que le levier (19) est supporté par un évidement (24) d'un corps (20) porté par la monture (2).

**6)** Balai d'essuie-glace selon l'une des revendications précédentes, caractérisé en ce que le moyen élastique (30) est logé dans l'évidement (24).

**7)** Balai d'essuie-glace selon l'une des revendications précédentes, caractérisé en ce que le levier (19) et le corps (20) forment l'un des éléments (4,12,13) de la monture porteuse (2).

**8)** Balai d'essuie-glace selon l'une des revendications précédentes, caractérisé en ce que la lame (3) porte un arrêtoir (31) permettant de limiter le coulissement du levier (19) en direction de la surface à essuyer (S).

FIG.1

FIG.2

**Office européen des brevets**

**RAPPORT DE RECHERCHE EUROPEENNE**

Numero de la demande

EP    91 40 1790

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | FR-A-1145640 (GENERAL MOTORS CORPORATION)<br>* le document en entier * | 1 | B60S1/38 |

DOMAINES TECHNIQUES RECHERCHES (Int. Cl.5 )

B60S

Le présent rapport a été établi pour toutes les revendications

| Lieu de la recherche | Date d'achèvement de la recherche | Examinateur |
|---|---|---|
| LA HAYE | 16 SEPTEMBRE 1991 | VERLEYE J. |